Europäisches Patentamt

European Patent Office

Office européen des brevets

(11) Numéro de publication: **0 055 720**
**B1**

# (12) FASCICULE DE BREVET EUROPEEN

(45) Date de publication du fascicule du brevet: **11.06.86**

(21) Numéro de dépôt: **81901795.5**

(22) Date de dépôt: **01.07.81**

(86) Numéro de dépôt international:
**PCT/FR81/00086**

(87) Numéro de publication internationale:
**WO 82/00218 21.01.82 Gazette 82/03**

(51) Int. Cl.⁴: **G 12 B 5/00**, F 16 M 11/12,
B 23 Q 1/16, H 01 Q 3/08

(54) **DISPOSITIF D'ORIENTATION ET DE POSITIONNEMENT D'UNE CHARGE UTILE.**

(30) Priorité: **04.07.80 FR 8014959**

(43) Date de publication de la demande:
**14.07.82 Bulletin 82/28**

(45) Mention de la délivrance du brevet:
**11.06.86 Bulletin 86/24**

(84) Etats contractants désignés:
**CH DE FR GB LI**

(56) Documents cités:
**CH-A- 495 032**
**FR-A-1 415 475**
**FR-A-2 379 732**
**US-A-1 092 867**
**US-A-3 552 836**
**US-A-3 662 661**
**US-A-3 712 481**
**US-A-4 181 283**

(73) Titulaire: **AGENCE SPATIALE EUROPEENNE**
**8-10, rue Mario Nikis**
**F-75738 Paris Cedex 15 (FR)**

(72) Inventeur: **BENTALL, Richard Hugh**
**Berkenrode 355**
**NL-Voorhout (NL)**
Inventeur: **BRISCOE, Henry Mervyn**
**Sportlaan 319**
**NL-La Haye (NL)**

(74) Mandataire: **Ores, Irène et al**
**CABINET ORES 6, Avenue de Messine**
**F-75008 Paris (FR)**

Courier Press, Leamington Spa, England.

## Description

La présente invention est relative à un mécanisme qui a pour rôle d'orienter, positionner ou déplacer une charge utile sensible à l'orientation, dans une direction spécifique précise ou de positionner ou entraîner une charge utile d'une manière spécifique par rapport à un plateau fixe.

Les différentes fonctions réalisées par un tel mécanisme, qui seront décrites plus loin, qu'elles aient pour but de positionner une charge utile dans une position angulaire déterminée ou de synchroniser le déplacement, en conséquence du mouvement angulaire initial du fait que le dispositif est supporté sur une structure, ou qu'elles aient pour but d'entraîner la charge utile en antagonisme à une résistance ou à l'inertie ou de fournir une force dirigée contre un second dispositif, toutes ces fonctions seront dénommées dans ce qui va suivre: "orientation et positionnement de la charge utile".

On requiert généralement des mécanismes qui réalisent l'orientation et le positionnement d'une charge utile, qu'ils présentent un certain nombre de caractéristiques. Au nombre de ces caractéristiques, on compte, par exemple, l'aptitude à supporter le dispositif avant, pendant et après l'orientation et le positionnement de la charge utile, l'aptitude à fournir une méthode d'orientation et de positionnement qui présente la précision requise soit en raison de leur performance propre, soit en raison de leur aptitude à répondre à des ordres provenant d'un moyen de commande extérieur, les caractéristiques représentées par une faible masse et un faible volume, leur facilité de fixation à un point de montage et à la charge utile, leur fiabilité et le fait que les pannes que ces mécanismes peuvent subir doivent néanmoins permettre à la charge utile de conserver une orientation et un positionnement favorables, ainsi que d'autres caractéristiques requises par l'application spécifique.

De tels mécanismes qui fournissent une orientation et un positionnement de la charge utile, présentent des applications qui s'étendent du pointage des grands télescopes au positionnement d'instruments délicats. De telles applications peuvent comprendre, par exemple, des tables de gyroscopes et d'instruments de vol des avions, des supports d'orientation des télescopes, des plateformes de référence verticales, des raccords coudés ou à maneton pour les appareillages articulés ou les dispositifs de robotique, et de nombreuses autres applications. Dans les satellites, on a besoin de dispositifs de positionnement et d'orientation de charges utiles pour remplir de nombreuses fonctions, par exemple pour le pointage et l'orientation des panneaux solaires, le pointage des mâts et des antennes, l'orientation de roues à moment d'inertie, le pointage d'instruments, l'orientation des dispositifs de poussée et différents autres services d'exploration et de positionnement.

L'application du principe de base de la présente invention à ces différentes fonctions pourra être aisément comprise par référence à l'exemple donné et aux descriptions correspondantes. Un exemple d'une application dans laquelle les avantages de l'invention sont évidents, est celui du pointage d'antenne dans les satellites. De tels dispositifs sont dénommés communément "mécanisme de pointage d'antenne", et on utilisera pour les désigner dans ce qui va suivre, le sigle "APM".

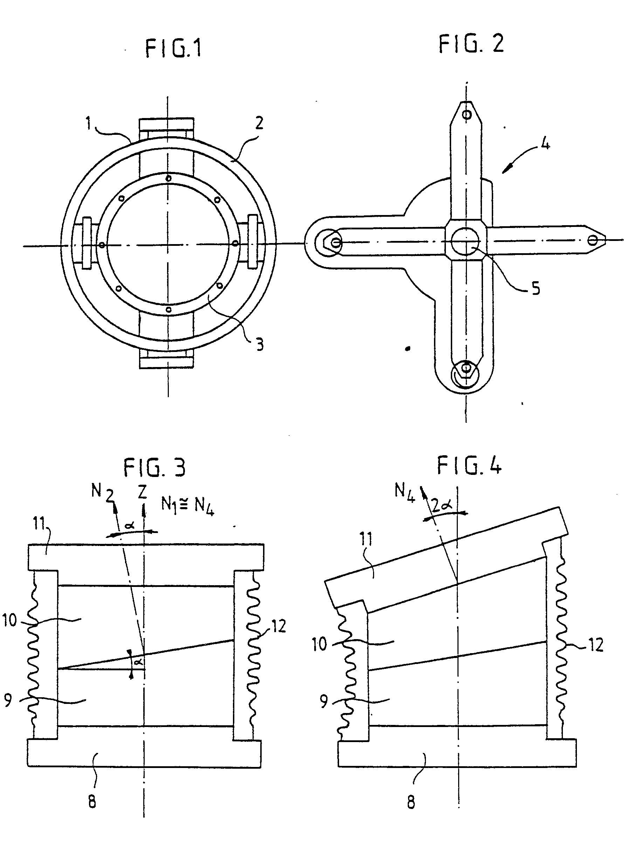

L'état de l'Art comprend des dispositifs de pointage d'antennes de différents types génériques dont les schémas de principe, représentés aux figures 1 et 2, illustrent deux systèmes communément utilisés.

La figure 1 est une représentation schématique d'un mécanisme de pointage d'antenne du type à articulation à cardan. Les pièces de structure essentielles de ce dispositif sont la structure de base 1, la structure de cardan 2 et la structure de la charge utile. La structure de cardan 2 est reliée à la structure de base 1, au moyen d'une suspension à palier ou à pivot (non représentée), et elle est entraînée par un dispositif d'actionnement qui peut prendre la forme d'une commande électromagnétique directe ou reliée par une boîte de vitesse, entre les deux pièces de structure, ou par un dispositif d'actionnement linéaire appliqué entre les deux structures de manière à déterminer une rotation relative autour de l'axe A. La structure d'antenne est montée sur la structure de cardan par laquelle elle est entraînée, ce qui lui permet d'acquérir son positionnement suivant deux axes par rapport à l'interface du satellite.

La figure 2 est une représentation schématique d'un mécanisme de pointage d'antenne du type à joint universel dans lequel l'antenne est supportée sur une structure en forme de croix 4, elle-même montée sur un joint universel 5, c'est-à-dire sur une suspension à deux ou à plusieurs axes à disposition centrale. Un tel joint pourrait être constitué de façon spécifique par un joint à rotule ou par un système à palier à articulation à cardan, à deux axes, ou par un élément flexible. Dans l'application de ce type de mécanismes de pointage d'antenne, on peut se passer de la structure de base, et utiliser la surface du satellite, et, de même, l'antenne elle-même peut être montée directement sur le joint universel et être actionnée directement. Toutefois, le fait de se passer de ces structures empêche le contrôle de l'APM en tant que mécanisme unique et complique son utilisation.

Dans le Brevet américain US—4 181 283 un dispositif de pointage rotatif est décrit comprenant trois éléments: une base, un rotor cylindrique, et une plate-forme pour supporter par exemple une antenne. Le couplage entre le rotor et la plate-forme est en plan incliné. Si le rotor et la plate-forme sont entraînés en rotation par des moteurs séparés, le vecteur de pointage de la plate-forme peut être pointé grâce au mouvement conique de ce vecteur. Comme la plate-forme tourne avec les moteurs, il faut éventuellement prévoir un mécanisme supplémentaire d'alignement ultérieur de la plate-forme suivant des caractéristiques asymétriques de l'antenne.

Ces dispositifs conformes à l'Art antérieur, présentent quelques inconvénients, qui sont notamment les suivants:

— en ce qui concerne leur capacité de charge, l'aptitude de ces dispositifs à fournir une faible masse avec un montage à paliers précis et à supporter, en même temps, la charge à travers l'environnement de lancement du satellite, est très limitée et il en résulte fréquemment la nécessité d'inclure dans le mécanisme, un dispositif dit ''de sécurité'' qui protège l'APM durant le lancement, et qui est libéré par un dispositif d'actionnement séparé tel qu'un système pyrotechnique, une fois que le satellite a atteint son orbite opérationnelle;

— en ce qui concerne la précision de leur pointage, ces mécanismes ont des performances variables en fonction de leur mode de fonctionnement. Lorsque l'information de position provient de l'intérieur de l'APM lui-même, leur taille et leur forme de construction ouverte les rend sensibles aux variations thermiques, des gradients de température à travers le mécanisme étant particulièrement destructeurs de l'obtention d'une précision de pointage élevée. Dans le mode de construction à boucle fermée qui utilise un capteur d'erreur extérieur, on peut obtenir une précision élevée dans généralement tous les types d'APM, pourvu qu'une augmentation différentielle angulaire suffisamment petite puisse être exigée sur chaque axe indépendamment, et pourvu que le jeu mort soit faible et la rigidité élevée, et pourvu que le système de contrôle soit apte à répondre aux erreurs à temps;

— en ce qui concerne leur masse, ces dispositifs conformes à l'Art antérieur, ont normalement une masse élevée due à leur construction propre et à la masse des systèmes qui leur sont associés — systèmes pyrotechniques, dispositifs de sécurité et structures additionnelles requises pour le support;

— en ce qui concerne la facilité avec laquelle ces systèmes peuvent être fixés au satellite ou à la charge utile, la grande taille de ces dispositifs empêche leur utilisation, notamment celle du dispositif à joint universel, là où on a besoin d'une grande surface de montage;

— en ce qui concerne les pannes qu'ils peuvent subir, il est souvent souhaitable qu'un système APM qui maintient normalement le pointage d'antenne dans une direction fixe mais dont on requiert qu'il repointe périodiquement l'antenne sur commande dans une direction différente, puisse revenir à sa direction nominale fixe en cas de panne de l'un des dispositifs d'actionnement qui commandent les axes. Ceci est extrêmement difficile à obtenir et on résout habituellement le problème en adoptant des dispositifs de déclenchement pyrotechniques qui découplent le dispositif d'actionnement atteint (ce qui n'est pas toujours nécessaires si, par exemple, un moteur entraîne l'axe directement sans l'intermédiaire d'un système à engrenages), et en pourvoyant l'APM d'un autre dispositif pour ramener l'antenne à sa position nominale et d'un autre système pyrotechnique pour verrouiller l'antenne en toute sécurité dans cette position;

— en ce qui concerne la complexité, on comprendra vite que les dispositifs conformes à l'Art antérieur font usage d'une plus grande complexité pour réaliser leur fonction qu'un dispositif tel que celui qui fait l'objet de la présente invention, qui sera décrit dans ce qui va suivre.

La présente invention a pour but de pourvoir à un dispositif d'orientation et de positionnement d'une charge utile, qui répond mieux aux nécessités de la pratique que les dispositifs visant au même but antérieurement connus, notamment:

— en ce que le dispositif proposé est un dispositif d'orientation et de positionnement à deux axes, simple et précis;

— en ce qu'il est capable de revenir à son orientation nominale en cas de panne de l'un des dispositifs d'actionnement utilisés dans sa construction;

— en ce qu'il est compact et de dimensions relativement petites et néanmoins capable de supporter une charge utile de masse significative par comparaison à la masse du dispositif lui-même;

— en ce que le dispositif conforme à l'invention peut aisément être clos de façon étanche pour assurer la protection du mécanisme qu'il contient, pour permettre l'utilisation de lubrifiants sans craindre une fuite vers l'environnement extérieur, et pour fournir un mécanisme fermé qui permet d'obtenir des températures uniformes dans le dispositif, réduisant ainsi les effets nuisibles des températures et des gradients de température;

— en ce que le dispositif d'orientation conforme à l'invention peut être utilisé dans un satellite et peut résister à des charges de lancement élevées sans requérir l'introduction de dispositifs de sécurité complexes.

La présente invention a pour objet un dispositif d'orientation et de positionnement d'une charge utile, portée par un plateau de support, du type comprenant:

— un premier élément, constitué par une plaque de base couplée par des moyens de couplage à

— au moins un deuxième élément, de forme sensiblement cylindrique, dont l'une des faces est en plan incliné, l'un des deuxièmes éléments étant couplé par des moyens de couplage à

— au moins un troisième élément, de forme sensiblement cylindrique, dont l'une des faces est en plan incliné, laquelle face est parallèle à la face en plan incliné de l'un des deuxièmes éléments, lesdits premier, deuxième et troisième éléments étant assemblés de manière à constituer un empilement, et des premiers moyens moteurs étant prévus pour commander une rotation relative de l'un des deuxièmes éléments par rapport au premier élément,

lequel dispositif est caractérisé en ce qu'un quatrième élément est superposé à l'empilement constitué par lesdits premier, deuxième et troisième éléments, lequel quatrième élément constitue ledit plateau de support de la charge utile, en ce que ce quatrième élément est couplé audit premier élément par des moyens de couplage flexibles en flexion et en extension, mais qui sont rendus rigides en torsion par des moyens propres à empêcher la rotation du quatrième élément par rapport au premier élément, et en ce que des deuxièmes moyens moteurs commandent la rotation de l'un des troisièmes éléments par rapport au quatrième élément.

Outre les dispositions qui précèdent, l'invention comprend encore d'autres dispositions, qui ressortiront de la description qui va suivre.

L'invention sera mieux comprise à l'aide de la description qui va suivre, qui se réfère aux dessins annexés dans lesquels:

— la figure 3 est une représentation schématique d'un dispositif d'orientation de charge utile, conforme à l'invention,

— la figure 4 est une représentation schématique d'un dispositif conforme à l'invention, dans lequel le deuxième élément cylindrique comportant une face en plan incliné a subi une rotation de 180°,

— la figure 5 représente un plan d'ensemble du dispositif correspondant à la structure de la figure 3,

— la figure 6 représente une variante d'agencement des paliers de couplage des éléments cylindriques entre eux,

— la figure 7 présente, de façon schématique, trois variantes a, b, c,

— la figure 8 présente, de façon schématique, des variantes de réalisation (a, b, c, d, e, f) dans lesquelles les angles d'inclinaison des éléments cylindriques superposés sont choisis de manière à empêcher toute rotation autour de l'axe Z du dispositif, et à déterminer une approche contrôlée par rapport audit axe ou un mouvement cartésien.

Il doit être bien entendu, toutefois, que ces dessins et les parties descriptives correspondantes, sont donnés uniquement à titre d'illustration de l'objet de l'invention, dont ils ne constituent en aucune manière une limitation.

Pour simplifier la description, on considèrera que le dispositif est essentiellement constitué par cinq parties, comme le montre la figure 3, à savoir: une plaque de base 8, un premier plateau cylindrique 9 dont l'une des faces est en plan incliné, un second plateau cylindrique 10 dont l'une des faces est en plan incliné et un plateau de support 11 de la charge utile, ainsi qu'une membrane anéroïde, flexible en flexion et en extension, mais rigide en torsion, qui relie la plaque de base 8 et le plateau de support 11 l'un à l'autre, de telle manière que s'il se produit un basculement entre les éléments 8 et 11, une rotation autour de l'axe Z ne peut se produire.

Les éléments 8 et 9, 9 et 10, et 10 et 11 sont assemblés entre eux par des paliers appropriés qui autorisent une rotation mutuelle entre ces paires d'éléments. Les angles des éléments cylindriques dont l'une des faces est en plan incliné 9 et 10, sont égaux et les axes des paliers disposés entre les éléments 8 et 9 et 10 et 11 sont coïncidents et normaux respectivement à la surface de la monture de base de l'élément 8 et à la surface de la monture d'antenne de l'élément 11. C'est la raison pour laquelle dans la position nominale de démarrage, les deux surfaces de monture sont parallèles et la normale au plan de l'élément 11 coïncide avec l'axe Z.

Les mouvements des différents éléments ont une incidence sur l'orientation de la normale au plan de la charge utile. La figure 4 montre le système après une rotation de l'élément 10 d'un angle de 180°.

Dans l'application du dispositif de pointage d'antenne prise comme un exemple illustrant l'invention, il est avantageux d'empêcher la rotation autour de l'axe Z dans certains cas, par exemple pour les antennes polarisées et les faisceaux profilés, dans lesquels le satellite maintient le pointage de l'axe Z. C'est sur les bases exposées dans ce qui précède que repose l'exemple de l'objet de l'invention représenté à la figure 3, dans lequel un système à membrane anéroïde 12 a été utilisé pour relier l'élément 11 à l'élément 8.

Il est clair qu'alors qu'une structure ne comportant pas de membrane anéroïde requiert, en principe, trois moteurs pour entraîner chacun des paliers, la structure représentée à la figure 3 ne requiert que deux moteurs appliqués à n'importe lesquels de deux paliers adjacents, des trois paliers existants dans la structure conforme à l'invention. Il est commode d'utiliser les deux paliers qui se trouvent entre les éléments 8 et 9 et entre les éléments 10 et 11, pour éviter la nécessité de faire passer du courant à travers un raccord en rotation.

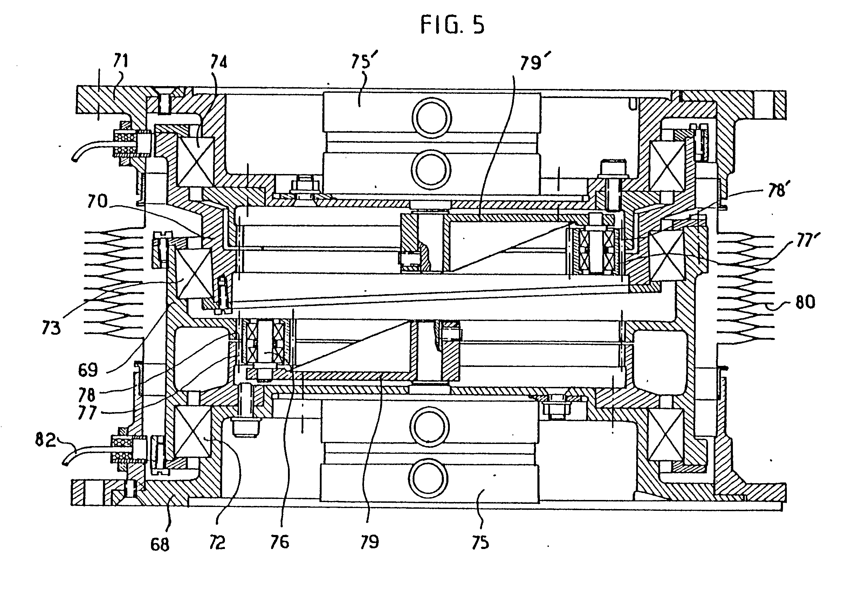

Un plan d'ensemble du mode de réalisation donné à titre d'exemple de l'invention, est représenté à la figure 5, ce plan d'ensemble correspondant à la structure de la figure 3.

Ce dispositif comprend une base 68, un premier élément 69 ayant la même fonction que l'élément 9 de la figure 3, un second élément 70 ayant la même fonction que l'élément 10 de la figure 3, un plateau 71 de support de la charge utile, un premier palier 72 (69, 68), un deuxième palier 73 (70, 69), un troisième palier 74 (71, 70), un premier dispositif d'actionnement (75, 76, 77, 78, 79) et un second dispositif d'actionnement (75', 76', 77', 78', 79'), ainsi que la membrane anéroïde 80.

On voit également sur cette figure, un dispositif de mesure 82 de la position de l'élément 69 par rapport à l'élément 68, et de l'élément 70 par rapport à l'élément 71. Un tel capteur de position est très utile dans l'application pratique du dispositif conforme à la présente invention. Il est, en principe, suffisant de connaître une position mesurée pour chaque rotation référencée, et d'utiliser un mode d'entraînement pas-à-pas qui fournit des augmentations de quantités connues, par rapport à ces positions données (lorsque les erreurs proviennent d'une source extérieure, un capteur de position n'est pas toujours un élément essentiel).

Les dispositifs d'actionnement comportent chacun un moteur (75, 75'), un engrenage planétaire (76, 76'), une couronne dentée montée respectivement sur la base, les deux éléments cylindriques et le support de la charge utile (77, 78, 77', 78'), ainsi que des bras d'actionnement (79, 79').

Comme les deux dispositifs d'actionnement sont identiques, on n'en décrira qu'un seul à titre d'exemple dans ce qui va suivre: un moteur pas-à-pas 75 entraîne le bras 79 auquel est relié un engrenage planétaire 76 qui peut tourner librement sur le bras. Cet engrenage planétaire entraîne les couronnes dentées 77 et 78, 77 étant montée sur la base 68 et 78 montée sur l'élément 69. Comme l'une des couronnes dentées comporte au moins une dent de moins que l'autre, un déplacement complet du bras 79 produit un repérage de la base 68 par rapport à l'élément 69, correspondant à la différence du nombre des dents.

Si les intervalles entre les dents de la couronne dentée sont trop petits pour permettre l'engrènement direct représenté à la figure 5 pour faciliter la représentation graphique, il peut alors être nécessaire d'utiliser différents diamètres de cercle primitif pour les couronnes dentées 77, 78 à l'engrènement approprié. En pareil cas, il faudrait diviser l'engrenage planétaire en deux engrenages planétaires. Ce système d'engrenage présente un rapport d'engrenage à "une seule passe" élevé, et se trouve, en outre, parmi les systèmes d'engrenages qui présentent une résistance élevée au retour en arrière, ce qui, comme on le verra plus loin constitue un avantage important dans l'exemple représenté.

Les paliers 72, 73, 74 représentés à la figure 5 sont des paliers à contact en quatre points ou en "arc gothique" qui permettent l'adoption d'un seul type de palier, contrairement à l'Art antérieur où on utilise de façon classique, deux ou plusieurs systèmes de paliers.

Les avantages du mode de réalisation décrit à titre d'exemple dans ce qui précède, sont, notamment, les suivants:

— en ce qui concerne la capacité de support de la charge, la construction du dispositif permet l'utilisation de paliers de grand diamètre sans que le dispositif conforme à l'invention soit pénalisé par une masse excessive comme les dispositifs de l'Art antérieur. Cet avantage qui vient s'ajouter au fait que comme le couple réfléchi dans le dispositif d'actionnement est très faible, un dispositif d'actionnement capable de résister à des forces de retour en arrière peut empêcher la rotation du panneau à partir de sa position préréglée et évite d'avoir recours à un dispositif de sécurité ou à un dispositif de blocage lors du lancement, dans de nombreuses applications pratiques;

— en ce qui concerne la précision du pointage, la compacité du dispositif conforme à l'invention contribue à minimiser les gradients thermiques qui sont particulièrement défavorables à la précision du pointage. La liberté accrue de pouvoir utiliser des lubrifiants liquides du fait de l'environnement fermé, par exemple, contribue dans une mesure importante à favoriser le transfert de chaleur à travers les paliers, réduisant ainsi les gradients thermiques dans cette zone. De plus, comme la variation totale du pointage qui est requise dans le cas des antennes est habituellement faible (moins de ±4°, et dans certains cas où il n'est pas requis de repointage, moins de ±0,4°), on obtient un rapport très favorable entre le mouvement du dispositif d'actionnement et l'orientation de l'antenne, ce qui permet d'obtenir une haute précision ou de faibles dimensions de pas;

— en ce qui concerne la facilité de fixation du dispositif tant à l'antenne qu'au satellite, on comprendra aisément que la compacité du dispositif constitue un avantage important à l'actif du dispositif conforme à l'invention. En outre, l'antenne peut être supportée suivant un angle par rapport à l'alignement parallèle nominal sans avoir à modifier le mécanisme, ce qui facilite considérablement l'intégration dans les cas où il existe des contraintes particulières de géométrie lors du lancement.

— En ce qui concerne les types de pannes que peut subir le dispositif conforme à l'invention, en cas de panne d'un dispositif d'actionnement, il est possible de ramener l'antenne dans l'alignement parallèle nominal (0,0) en actionnant le dispositif d'actionnement qui n'est pas en panne.

De plus, après avoir atteint la position (0,0), l'antenne conservera sa position sans avoir à fournir de l'énergie au dispositif, et sans avoir à utiliser un système de blocage, en raison de la résistance au retour en arrière du dispositif d'actionnement.

— En ce qui concerne la masse et la complexité, l'invention fournit une structure de mécanisme de pointage d'antenne qui offre des avantages considérables par sa simplicité mécanique, par rapport aux dispositifs proposés conformément à l'Art antérieur, entraînant ainsi des économies de masse non seulement dans le dispositif lui-même, mais également dans les systèmes auxiliaires, par exemple dans les systèmes d'encageage et dans les dispositifs d'actionnement et leur système de commande, ainsi que dans les systèmes pyrotechniques.

L'on comprendra aisément qu'il existe un grand nombre de variantes aux agencements et structures pour la réalisation du mode de réalisation représenté à la figure 5.

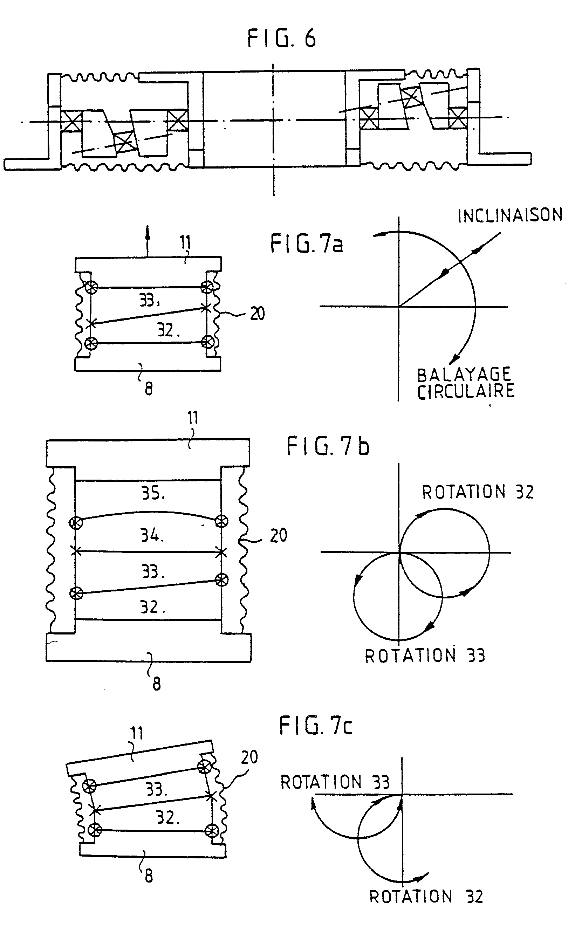

Des paliers à simple rangée de billes ne sont pas nécessaires dans le cadre de la présente invention; on peut utiliser des paliers à double rangée de billes et il peut être intéressant, par exemple, pour réduire la hauteur du dispositif, de grouper les paliers l'un à l'intérieur de l'autre, comme le montre schématiquement la figure 6.

On dispose de nombreuses techniques pour empêcher la rotation de l'élément 11 par rapport à l'élément 8, par exemple à l'aide d'un diaphragme flexible dont l'un des bords est fixé à la plaque 8 ou à un prolongement de cette dernière; une membrane anéroïde telle que 20, constitue un exemple préféré d'un diaphragme, car elle permet tous les degrés de liberté excepté la torsion. D'autres moyens de contrôler la rotation, sont représentés par des ressorts à lame et des guides à friction agencés pour être orthogonaux l'un par rapport à l'autre; les seconds présentent l'avantage potentiel de combiner une lecture angulaire avec la fonction de restriction. On peut également remplacer la membrane anéroïde de la figure 5 par des moyens électromagnétiques, ou la compléter par ces moyens si les membranes anéroïdes sont compliantes dans toute la gamme de mouvements requise. L'incorporation d'un troisième dispositif d'actionnement avec sa commande de rotation permet un degré de pointage suivant trois axes, en sorte que différentes performances hybrides peuvent être réalisées.

La figure 7b montre une déviation du dispositif conforme à l'invention, représenté et décrit à titre d'exemple non limitatif, suivant laquelle le palier qui se trouve entre l'élément 32 et l'élément 33 a été basculé d'un angle α, le palier central qui se trouve entre l'élément 33 et l'élément 34 est horizontal et l'angle au sommet entre l'élément 34 et l'élément 35 a été basculé suivant un angle α, le plan de basculement étant disposé orthogonalement au plan du palier (32, 33). La figure 7c montre un fonctionnement quasi-cartésien similaire, obtenu à partir du dispositif de la figure 5, dans lequel on a fait tout d'abord tourner l'élément 33 de 90° avant de fixer la membrane anéroïde 20.

Dans les schémas auxquels il vient d'être fait référence, on a indiqué par X les emplacements où il est nécessaire qu'il y ait des paliers et par ⊗ ceux où un dispositif d'actionnement du palier est nécessaire.

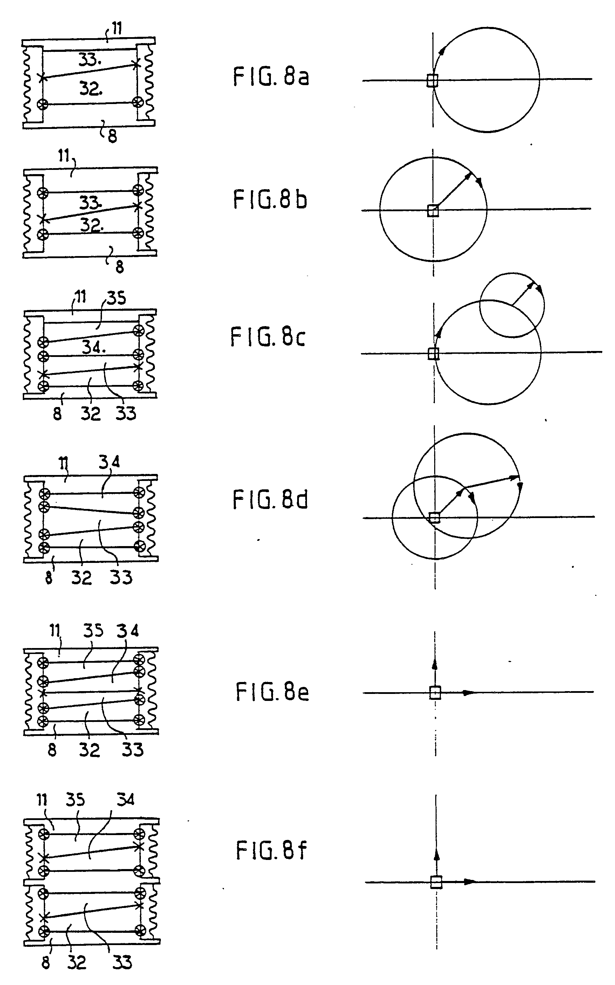

La description qui précède s'est référée jusqu'à présent à un seul mode de réalisation. Il est cependant clair que la présente invention donne lieu à une série importante de dispositifs présentant des caractéristiques diverses qui ont leur place dans des dispositifs d'orientation de charges utiles. Les figures 8a—f représentent, de façon schématique, des exemples de tels dispositifs.

Il est clair que l'invention permet de construire bien d'autres dispositifs, et que l'on peut réaliser différents fonctionnements hybrides en utilisant de façon appropriée des dispositifs d'actionnement ou des embrayages pour réaliser l'orientation requise. L'un des avantages de la réalisation de ces mouvements à l'aide de moyens essentiellement mécaniques, est représenté par la simplification de la commande électronique requise.

On a adopté dans les figures 8a—f une convention supplémentaire pour les représentations qui décrivent le mouvement des dispositifs: un carré à l'intersection des coordonnées indique que la rotation autour de l'axe Z est empêchée. L'absence de symbole à cet endroit indique que la rotation autour de l'axe Z est dépendante des autres rotations qui se produisent dans les mécanismes (dans la pratique, elle est la somme de toutes les rotations autour de l'axe Z).

Les exemples donnés aux figures 8a—f dans lesquelles la rotation autour de l'axe Z est empêchée, sont les suivants.

La figure 8a montre un dispositif qui procure une approche contrôlée. Cette notion est représentée comme étant décalée par rapport à l'axe Z, mais il est clair que l'on peut faire varier le décalage en choisissant de façon appropriée la géométrie des brides de montage de manière à pouvoir réaliser l'approche de l'axe Z autour d'un axe choisi.

La figure 8b montre le principe de base du dispositif décrit à titre d'exemple.

La figure 8c montre un dispositif comportant quatre paliers et trois dispositifs d'actionnement qui fournissent une orientation autour d'une position nominale à 340° qui est elle-même déterminée par la notion d'approche induite par le dispositif d'actionnement de (34, 35). Pour une position nominale fixe à 340°, l'orientation est contrôlée par le dispositif (8, 32, 33, [34, 35]) entraîné par les dispositifs d'actionnement de (8, 32) et (33, 34).

La figure 8d représente une autre possibilité de l'invention, dans laquelle le dispositif d'actionnement — ou embrayage — est appliqué à tous les paliers, dans un dispositif dont la torsion est empêchée, fournissant des variantes de ces modes de fonctionnement ou des modes de fonctionnement hybrides. Dans la figure 8d, le dispositif d'actionnement appliqué entre les éléments (32, 33) et (33, 34) peut être soit "bloqué", auquel cas le palier concerné ne peut pas tourner, soit "débloqué", auquel cas le palier est libre de tourner. Si l'on suppose que le dispositif d'actionnement de (32, 33) est bloqué et que le dispositif d'actionnement de (33, 34) est debloqué, dans ce cas le premier mouvement utilisant les dispositifs d'actionnement de (8, 32) et de (34, 35) fournit une capacité d'orientation similaire à celle du dispositif décrit à titre d'exemple qui utilise les éléments [8, [32, 33], 34, 35]. Si, à présent, c'est le dispositif d'actionnement de (32, 33) qui est débloqué et le dispositif d'actionnement de (33, 34) qui est bloqué, dans ce cas dans un second mouvement, le dispositif [8, 32 [33, 34], 35] fournit une orientation autour de la position nominale zéro dictée par le premier mouvement. Il y a lieu de noter que, dans ces mouvements, les angles d'inclinaison diffèrent.

La figure 8e montre un dispositif qui fournit un mouvement cartésien.

La figure 8f montre un autre dispositif qui fournit un mouvement cartésien, ce dispositif constituant une combinaison de deux dispositifs du type décrit à la figure 8b.

**Revendications**

1. Dispositif d'orientation et de positionnement d'une charge utile portée par un plateau de support, du type comprenant:

— un premier élément, constitué par une plaque de base (8) couplée par des moyens de couplage à

— au moins un deuxième élément, de forme sensiblement cylindrique (9, 32), dont l'une des faces est en plan incliné, l'un des deuxièmes éléments étant couplé par des moyens de couplage à

— au moins un troisième élément, de forme sensiblement cylindrique (10, 33), dont l'une des faces est en plan incliné, laquelle face est parallèle à la face en plan incliné de l'un des deuxièmes éléments,

lesdits premier, deuxième et troisième éléments étant assemblés de manière à constituer un empilement, et des premiers moyens moteurs (75) étant prévus pour commander une rotation relative de l'une des deuxièmes éléments par rapport au premier élément,

lequel dispositif est caractérisé en ce qu'un quatrième élément est superposé à l'empilement constitué par lesdits premier, deuxième et troisième éléments, lequel quatrième élément (11) constitue ledit plateau de support de la charge utile, en ce que ce quatrième élément est couplé audit premier élément par des moyens de couplage flexibles en flexion et en extension, mais qui sont rendus rigides en torsion par des moyens propres à empêcher la rotation du quatrième élément par rapport au premier élément, et en ce que des deuxièmes moyens moteurs (75') commandent la rotation de l'un des troisièmes éléments par rapport au quatrième élément.

2. Dispositif selon la revendication 1, caractérisé en ce que les moyens propres à empêcher la rotation de la plaque de base (8) par rapport au plateau de support (11) de la charge utile, sont constitués par une membrane anéroïde (12—20).

3. Dispositif selon la revendication 1, caractérisé en ce que les moyens propres à empêcher la rotation de la plaque de base (8) par rapport au plateau de support (11) de la charge utile, sont constitués par des ressorts à lame.

4. Dispositif selon la revendication 1, caractérisé en ce que les moyens propres à empêcher la rotation de la plaque de base (8) par rapport au plateau de support (11) de la charge utile, sont constitués par des guides à friction agencés orthogonalement l'un par rapport à l'autre.

5. Dispositif selon la revendication 1, caractérisé en ce que les moyens propres à empêcher la rotation de la plaque de base (8) par rapport au plateau de support (11) de la charge utile, sont constitués par des moyens électromagnétiques utilisés seuls ou en association avec une membrane anéroïde.

6. Dispositif selon l'une quelconque des revendications 1 à 5, caractérisé en ce que lesdits premiers et deuxièmes moyens moteurs (75, 75') coopèrent avec au moins un bras d'actionnement (79, 79'), au moins un engrenage planétaire (76, 76') porté par ledit bras, au moins une couronne dentée (77) montée sur la plaque de base, une deuxième couronne dentée (78) montée sur chacun desdits éléments sensiblement cylindriques dont l'une des faces est en plan incliné, une couronne dentée montée sur le plateau de support de la charge utile, au moins deux desdites couronnes dentées susdites étant entraînées par l'engrenage planétaire susdit.

7. Dispositif selon la revendication 6, caractérisé en ce que le moteur est un moteur pas-à-pas.

8. Dispositif selon l'une quelconque des revendications 1 à 7, caractérisé en ce que les paliers sont des paliers à quatre points de contact.

9. Dispositif selon l'une quelconque des revendications 1 à 7, caractérisé en ce que les paliers sont des paliers magnétiques.

10. Dispositif d'orientation et de positionnement selon l'une quelconque des revendications 1 à 9, caractérisé en ce qu'il comprend un premier palier motorisé associé au deuxième élément (9) de forme sensiblement cylindrique et à la plaque de base (8), un second palier motorisé associé au troisième élément (10) de forme sensiblement cylindrique et au plateau de support (11), et un palier non motorisé associé au deuxième et au troisième éléments (9, 10) de forme sensiblement cylindrique.

11. Dispositif selon l'une quelconque des revendications 1 à 9, caractérisé en ce qu'il comprend un palier motorisé associé au deuxième élément (9) de forme sensiblement cylindrique et à la plaque de base (8), un palier non motorisé associé au deuxième et au troisième éléments (9, 10) de forme sensiblement cylindrique et un moyen de fixation reliant le troisième élément de forme sensiblement cylindrique rigidement au plateau de support (11).

12. Dispositif d'orientation et de positionnement selon l'une quelconque des revendications 1 à 9, caractérisé en ce qu'il comprend, outre lesdits deuxièmes et troisièmes éléments (32, 33), au moins un cinquième et un sixième éléments (34, 35) qui sont également de forme sensiblement cylindrique et dont l'une des faces est en plan incliné, laquelle face en plan incliné de l'un des cinquièmes éléments est parallèle à la face en plan incliné de l'un des sixièmes éléments, l'un des cinquièmes éléments étant couplé par des moyens de couplage à au moins un des sixièmes éléments.

13. Dispositif selon la revendication 12, caractérisé en ce que l'ensemble formé par au moins le cinquième (34) et le sixième (35) éléments est associé par l'intermédiaire d'un palier non motorisé à l'ensemble formé par au moins le deuxième et le troisième éléments (32, 33), après avoir subi une rotation de 90°, le deuxième élément (32) étant associé au troisième (33) par l'intermédiaire d'un premier palier motorisé, le cinquième élément (34) étant associé au sixième élément (35) par l'intermédiaire d'un second palier motorisé.

14. Dispositif selon la revendication 12, caractérisé en ce qu'il comprend un premier palier motorisé associé à la plaque de base et au deuxième élément (32) de forme sensiblement cylindrique, un deuxième palier motorisé associé au troisième et au cinquième éléments (33, 34) de forme sensiblement cylindrique, un troisième palier motorisé associé aux cinquième et sixième éléments (34, 35) de forme sensiblement cylindrique, un palier non motorisé associé aux deuxième et troisième éléments (32, 33) de forme sensiblement cylindrique, et des moyens fixant rigidement le sixième élément (35) de forme sensiblement cylindrique au plateau de support (11).

15. Dispositif selon la revendication 12, caractérisé en ce qu'il comprend un premier palier motorisé associé à la plaque de base (8) et au deuxième élément (32) de forme sensiblement cylindrique, un deuxième palier motorisé associé aux deuxième et troisième éléments (32, 33) de forme sensiblement cylindrique, un troisième palier motorisé associé aux cinquième et sixième éléments (34, 35) de forme sensiblement cylindrique, un quatrième palier motorisé associé au sixième élément (35) sensiblement cylindrique et au plateau de support (11), et des moyens reliant rigidement les troisième et cinquième éléments (33, 34) de forme sensiblement cylindrique.

16. Dispositif selon les revendications 12 et 15, caractérisé en ce que les moyens reliant rigidement les troisième et cinquième éléments (33, 34) de forme sensiblement cylindrique, sont remplacés par un palier non motorisé.

17. Dispositif d'orientation et de positionnement selon l'une quelconque des revendications 1 à 9, caractérisé en ce qu'il comprend deux dispositifs selon la revendication 10, superposés.

**Patentansprüche**

1. Vorrichtung zur Orientierung und Einstellung einer Nutzlast, die auf einer Trägerplatte ruht, mit
— einem ersten Element, das durch eine Grundplatte (8) gebildet ist, welche durch Koppeleinrichtungen mit
— wenigstens einen zweiten im wesentlichen zylindrisch geformten Element verbunden ist, dessen eine Seite eine geneigte Ebene (9, 32) darstellt, wobei eines der zweiten Elemente durch Koppeleinrichtungen mit
— wenigstens einem dritten im wesentlichen zylindrisch geformten Element (10, 33) verbunden ist, dessen eine Seite eine geneigte Ebene darstellt, welche parallel zur geneigten Seite eines der zweiten Elemente verläuft,
wobei das erste, die zweiten und die dritten Elemente in der Weise eines Stapels zusammengesetzt sind und erste Antriebseinrichtungen (75) vorgesehen sind, um eine relative Rotation eines der zweiten Elemente in Bezug auf das erste Element zu steuern,
dadurch gekennzeichnet, daß ein viertes Element auf dem durch das erste, die zweiten und die dritten Elemente gebildeten Stapel aufgeschichtet ist, wobei das vierte Element (11) die Trägerplatte für die Nutzlast bildet, daß dieses vierte Element mit dem genannten ersten Element durch Koppeleinrichtungen verbunden ist, die bezüglich einer Biegung und einer Ausdehnung flexibel, aber bezüglich einer Torsion durch Mittel starr gemacht sind, die geeignet sind, eine Rotation des vierten Elementes bezüglich dem ersten Element zu verhindern, und daß zweite Antriebseinrichtungen (75') die Rotation eines der dritten Elemente in Bezug auf das vierte Element steuern.

2. Vorrichtung nach Anspruch 1, dadurch gekennzeichnet, daß die Mittel, die geeignet sind, die Rotation der Grundplatte (8) gegenüber der Trägerplatte (11) der Nutzlast zu verhindern, durch eine Aneroidmembran (12—20) gebildet sind.

3. Vorrichtung nach Anspruch 1, dadurch gekennzeichnet, daß die Mittel, die geeignet sind, die Rotation der Grundplatte (8) gegenüber der Trägerplatte (11) der Nutzlast zu verhindern, durch Blattfedern gebildet sind.

4. Vorrichtung nach Anspruch 1, dadurch gekennzeichnet, daß die Mittel, die geeignet sind, die Rotation der Grundplatte (8) gegenüber der Trägerplatte (11) der Nutzlast zu verhindern, durch Friktionsführungen gebildet sind, die rechtwinklig zueinander angeordnet sind.

5. Vorrichtung nach Anspruch 1, dadurch gekennzeichnet, daß die Mittel, die geeignet sind, die Rotation der Grundplatte (8) gegenüber der Trägerplatte (11) der Nutzlast zu verhindern, durch elektromagnetische Einrichtungen gebildet sind, die alleine oder in Verbindung mit einer Aneroidmembran verwendet werden.

6. Vorrichtung nach einem der Ansprüche 1 bis 5, dadurch gekennzeichnet, daß die ersten und zweiten Antriebseinrichtungen (75, 75') mit wenigstens einem Betätigungsarm (79, 79'), mit wenigstens einem durch den Arm getragenen Planetengetriebe (76, 76'), mit wenigstens einem auf der Grundplatte angeordneten Zahnkranz (77), mit wenigstens einem zweiten Zahnkranz (78), die auf jeder der im wesentlichen zylindrischen Elemente befestigt sind, deren eine Seite eine geneigte Ebene darstellt, und mit einem auf der Trägerplatte der Nutzlast befestigten Zahnkranz zusammenwirken, wobei wenigstens zwei der vorerwähnten Zahnkränze durch das vorerwähnte Planetengetriebe angetrieben werden.

7. Vorrichtung nach Anspruch 6, dadurch gekennzeichnet, daß die Antriebseinrichtung ein Schrittmotor ist.

8. Vorrichtung nach einem der Ansprüche 1 bis 7, dadurch gekennzeichnet, daß die Lager Lager mit vier Berührungspunkten sind.

9. Vorrichtung nach einem der Ansprüche 1 bis 7, dadurch gekennzeichnet, daß die Lager Magnetlager sind.

10. Vorrichtung zur Orientierung und Einstellung einer Nutzlast nach einem der Ansprüche 1 bis 9, dadurch gekennzeichnet, daß sie ein erstes motorbetriebenes Lager, das einem zweiten Element (9) mit im wesentlichen zylindrischer Form und einer Grundplatte (8) zugeordnet ist, ein zweites motorbetriebenes Lager, das einem dritten Element (10) mit im wesentlichen zylindrischer Form und der Trägerplatte (11) zugeordnet ist, und ein nicht motorisiertes Lager aufweist, das dem zweiten und dem dritten Element (9, 10) mit im wesentlichen zylindrischer Form zugeordnet ist.

11. Vorrichtung nach einem der Ansprüche 1 bis 9, dadurch gekennzeichnet, daß sie ein erstes motorbetriebenes Lager aufweist, das einem zweiten Element (9) mit im wesentlichen zylindrischer Form und einer Grundplatte (8) zugeordnet ist, ein nichtmotorisiertes Lager, das dem zweiten und dem dritten Element (9, 10) mit im wesentlichen zylindrischer Form zugeordnet ist, und eine Befestigungseinrichtung aufweist, die das dritte Element mit im wesentlichen zylindrischer Form fest mit der Trägerplatte (11) verbindet.

12. Vorrichtung zur Orientierung und Einstellung einer Nutzlast nach einem der Ansprüche 1 bis 9, dadurch gekennzeichnet, daß sie zusätzlich zu den erwähnten zweiten und dritten Elementen (32, 33) wenigstens ein fünftes und ein sechstes Element (34, 35) aufweist, die ebenfalls eine im wesentlichen zylindrische Form aufweisen und von denen eine der Seiten eine geneigte Ebene bildet, wobei die die geneigte Ebene darstellende Seite eines der fünften Elemente parallel zur eine geneigte Ebene bildenden Seite eines der sechsten Elemente ist, und wobei eins der fünften Elemente durch Koppeleinrichtungen wenigstens mit einem der sechsten Elemente gekoppelt ist.

13. Vorrichtung nach Anspruch 12, dadurch gekennzeichnet, daß die durch wenigstens das fünfte Element (34) und das sechste Element (35) gebildete Einheit über ein nicht motorisiertes Lager der Einheit, die wenigstens durch die zweiten und dritten Elemente (32, 33) gebildet ist, nach Ausführen einer Drehung um 90 Grad zugeordnet ist, wobei das zweite Element (32) dem dritten Element (33) über ein motorisiertes Lager und das fünfte Element (34) dem sechsten Element (35) über ein zweites motorisiertes Lager zugeordnet ist.

14. Vorrichtung nach Anspruch 12, dadurch gekennzeichnet, daß sie ein erstes motorgetriebenes Lager, das der Grundplatte und dem zweiten Element (32) mit im wesentlichen zylindrischer Form zugeordnet ist, ein zweites motorgetriebenes Lager, das den dritten und fünften Elementen (33, 34) mit im wesentlichen zylindrischer Form zugeordnet ist, ein drittes motorgetriebenes Lager, das den fünften und sechsten Elementen (34, 35) mit im wesentlichen zylindrischer Form zugeordnet ist, ein nicht motorgetriebenes Lager, das den zweiten und dritten Elementen (32, 33) mit im wesentlichen zylindrischer Form zugeordnet ist und Mittel aufweist, die das sechste Element (35) mit im wesentlichen zylindrischer Form fest mit der Trägerplatte (11) verbinden.

15. Vorrichtung nach Anspruch 12, dadurch gekennzeichnet, daß sie ein erstes motorgetriebenes Lager, das der Grundplatte (8) und dem zweiten Element (32) mit im wesentlichen zylindrischer Form zugeordnet ist, ein zweites motorgetriebenes Lager, das den zweiten und dritten Elementen (32, 33) mit im wesentlichen zylindrischer Form zugeordnet ist, ein drittes motorgetriebenes Lager, das den fünften und sechsten Elementen (34, 35) mit im wesentlichen zylindrischer Form zugeordnet ist, ein viertes motorgetriebenes Lager, das dem sechsten Element (35) mit im wesentlichen zylindrischer Form und der Trägerplatte (11) zugeordnet ist, und Mittel aufweist, die das dritte und fünfte Element (33, 34) mit im wesentlichen zylindrischer Form fest miteinander verbinden.

16. Vorrichtung nach den Ansprüchen 12 und 15, dadurch gekennzeichnet, daß die Mittel zum festen Verbinden der dritten und fünften Elemente (33, 34) mit im wesentlichen zylindrischer Form durch ein nichtmotorisiertes Lager ersetzt sind.

17. Vorrichtung zur Orientierung und Einstellung einer Nutzlast nach einem der Ansprüche 1 bis 9, dadurch gekennzeichnet, daß sie zwei Vorrichtungen gemäß Anspruch 10 aufweist, die übereinander angeordnet sind.

**Claims**

1. Device for the orientation and positioning of a useful load carried by a support platform, of the type comprising:
— a first element, formed by a base plate (8) coupled by coupling means to
— at least a second element, substantially cylindrical in shape (9, 32), one of the faces of which is in an inclined plane, one of the second elements being coupled by coupling means to
— at least a third element, substantially cylindrical in shape (10, 33), one of the faces of which is in an inclined plane, which face is parallel to the inclined plane face of one of the second elements,
said first, second and third elements being assembled together so as to form a stack, and first motor means (75) being provided for causing relative rotation of one of the second elements with respect to the first element,
which device is characterized in that a fourth element is superimposed on the stack formed by said first, second and third elements, which fourth element (11) forms said platform supporting the useful load, in that this fourth element is coupled to said first element by coupling means flexible under flexion and extension, but which are made torsionally rigid by means adapted for preventing rotation of the fourth element with respect to the first element, and in that second motor means (75') control the rotation of one of the third elements with respect to the fourth elements.

2. Device according to claim 1, characterized in that the means adapted for preventing rotation of the base plate (8) with respect to the platform (11) supporting the useful load, are formed by bellows (12—20).

3. Device according to claim 1, characterized in that the means adapted for preventing rotation of the base plate (8) with respect to the platform (11) supporting the useful load, are formed by blade springs.

4. Device according to claim 1, characterized in that the means adapted for preventing rotation of the base plate (8) with respect to the platform (11) supporting the useful load are formed by friction guides arranged orthogonally with respect to each other.

5. Device according to claim 1, characterized in that the means adapted for preventing rotation of the base plate (8) with respect to the platform (11) supporting the useful load are formed by electromagnetic means used alone or in association with bellows.

6. Device according to any one of claims 1 to 5, characterized in that said first and second motor means (75, 75') cooperate with at least one actuating arm (79, 79') at least one planet gear (76, 76') carried by said arm, at least one ring gear (77) mounted on the base plate, a second ring gear (78) mounted on each of said substantially cylindrical elements one of the faces of which is in an inclined plane, a ring gear mounted on the platform supporting the useful load, at least two of said ring gears being driven by said planet gear.

7. Device according to claim 6, characterized in that the motor is a stepper motor.

8. Device according to any one of claims 1 to 7, characterized in that the bearings are bearings with four contact points.

9. Device according to any one of claims 1 to 7, characterized in that the bearings are magnetic bearings.

10. Orientation and positioning device according to any one of claims 1 to 9, characterized in that it comprises a first motorized bearing associated with the second element (9) of substantially cylindrical shape and with the base plate (8), a second motorized bearing associated with a third element (10) of substantially cylindrical shape and with the support platform (11), and a non motorized bearing associated with the second and third elements (9, 10) of substantially cylindrical shape.

11. Device according to any one of claims 1 to 9, characterized in that it comprises a motorized bearing associated with the second element (9) of substantially cylindrical shape and with the base plate (8), a non motorized bearing associated with the second and third elements (9, 10) of substantially cylindrical shape and a fixing means connecting the third element of substantially cylindrical shape rigidly to the support platform (11).

12. Orientation and positioning device according to any one of claims 1 to 9, characterized in that it comprises in addition to said second and third elements (32, 33), at least a fifth and a sixth elements (34, 35) which are also substantially cylindrical in shape and one of the faces of which is in an inclined plane, which inclined plane face of one of the fifth elements is parallel to the inclined plane face of one of the sixth elements, one of the fifth elements being coupled by coupling means to at least one of the sixth elements.

13. Device according to claim 12, characterized in that the assembly formed by at least the fifth (34) and the sixth (35) elements is associated through a non motorized bearing with the assembly formed by at least the second and the third elements (32, 33), after undergoing a rotation of 90°, the second element (32) being associated with the third (33) through a first motorized bearing, the fifth element (34) being associated with the sixth element (35) through a second motorized bearing.

14. Device according to claim 12, characterized in that it comprises a first motorized bearing associated with a base plate and with the second element (32) of substantially cylindrical shape, a second motorized bearing associated with the third and fifth elements (33, 34) of substantially cylindrical shape, a third motorized bearing associated with the fifth and sixth elements (34, 35) of substantially cylindrical shape, a non motorized bearing associated with the second and third elements (32, 33) of substantially cylindrical shape and means rigidly fixing the sixth element (35) of substantially cylindrical shape to the support platform (11).

15. Device according to claim 12, characterized in that it comprises a third motorized bearing associated with the base plate (8) and with the second element (32) of substantially cylindrical shape, a second motorized bearing associated with the second and third elements (32, 33) of substantially cylindrical shape, a third motorized bearing associated with the fifth and sixth elements (34, 35) of substantially cylindrical shape, a fourth motorized bearing associated with the sixth substantially cylindrical element (35) and with the support platform (11), and means rigidly connecting together the third and fifth elements (33, 34) of substantially cylindrical shape.

16. Device according to claims 12 and 15, characterized in that the means rigidly connecting together the third and fifth elements (33, 34) of substantially cylindrical shape are replaced by a non motorized bearing.

17. Orientation and positioning device according to any one of claims 1 to 9, characterized in that it comprises two superimposed devices according to claim 10.

## FIG. 1

## FIG. 2

## FIG. 3

$N_2$ $Z$ $N_1 \cong N_4$

α

α

11

10

12

9

8

## FIG. 4

$N_4$ 2α

11

10

12

9

8

FIG. 5

FIG. 6

FIG. 7a

INCLINAISON

BALAYAGE
CIRCULAIRE

FIG. 7b

11

35.
34.
33.
32.

20

8

ROTATION 32

ROTATION 33

FIG. 7c

11

33.
32.

20

8

ROTATION 33

ROTATION 32

3

FIG. 8a

FIG.8b

FIG. 8c

FIG. 8d

FIG. 8e

FIG. 8f

4